Europäisches Patentamt

European Patent Office

Office européen des brevets

(19)

(11) Publication number: **0 258 193**
**A2**

(12) # EUROPEAN PATENT APPLICATION

(21) Application number: **87850213.7**

(22) Date of filing: **29.06.87**

(51) Int. Cl.⁴: **B 60 P 7/08**

(30) Priority: **04.07.86 SE 8602974**

(43) Date of publication of application: **02.03.88**
**Bulletin 88/9**

(84) Designated Contracting States: **AT BE CH DE FR GB IT LI LU NL SE**

(71) Applicant: **AB Kinnegrip, Box 683, S-531 16 Lidköping (SE)**

(72) Inventor: **Björkman, Anders, Lidäkersgatan 1D, S-531 39 Lidköping (SE)**

(74) Representative: **Roth, Ernst Adolf Michael et al, GÖTEBORGS PATENTBYRA AB Box 5005, S-402 21 Göteborg (SE)**

(54) **Load anchoring arrangement.**

(57) A cargo securing device for cargo spaces (13), preferably on truck and trailer platforms and incorporating at least one cross-bar (12), applicable laterally over the cargo space and the end positions of which, by means of connecting means (11) being attachable to side flaps (17), chapel boards (18) or the like in the cargo space. Each connecting means (11) consists of two connecting members (14, 15), a first one (14) for loose connection at an arbitrary position along said side flap (17), chapel board (18) or the like, and a second one (15), which is pivotably arranged about a pivot (16) transversally to the first connecting members. The second connecting member (15) is designed for receiving one end portion of the cross-bar (12) and being equipped with at least one tab (26), which is arranged with the structure element, whereas in its other end position the tab is disengaged therefrom.

A cargo securing device for the cargo space particularly on truck and trailer platforms and incorporating at least one cross-bar or the like, applicable laterally over the cargo space, the end portions of which by means of connecting means being attachable to structure elements such as side flaps, chapel boards or the like, limiting said cargo space, whereby each connecting means consists of two connecting members, a first one for loose connection to said structure element and a second one for receiving one end portion of the cross-bar.

## Background of the invention

There are earlier known plurality of different devices for securing cargo, i.e. preventing the cargo from shifting during transport Most of these devices are rather complex constructions and require especial fitting devices in the cargo space. This will also entail that these cargo securing devices can not be arbitrarily located in the longitudinal direction of the cargo space, but only where appropriate fittings are mounted.

By US-A-2,980,037 such a device is known, where two holders may be hooked to and arrested in rails on opposite walls of the cargo space, whereupon a plank or the like may be placed between the holders across the cargo space, which plank is fixed to the holders by means of studs. This device requires that the cargo space is equipped with said rails and that the recesses therein are made at positions where they correspond to the measures of the cargo, which is seldom the case, whereby the cargo must be further propped in appropriate manner.

A cargo securing device is known by US-A-3,399,635 in which holders are displaceably arranged along horizontal rails in the cargo space for a belt, which can be tightened over the cargo space, thereby securing the cargo against displacement. The textile belt exerts a pulling force against the side walls of the cargo space, e.g. the side flaps, which is not desirable, as the side flaps of the cargo vehicle are not designed for taking up such stretching forces and a force directed against the cargo space may damage the cargo. The holder furthermore is not lockable in arbitrary positions but only where holes are provided in the rail.

From US-A-2,626,165 is known a device which extends across the cargo space and which is lockable in arbitrary positions. The part which corresponds to the cross-bar according to the present invention however consists of a locking device fixedly connected to the part, and being thread upon the rail. This means that the cargo securing device certainly can be affixed at arbitrary positions along the rails, but that it can not be removed, which must be considered as a marked drawback, as this device extending across the cargo space is impeding at loading and unloading.

## The purpose and most essential features of the invention

The purpose of the present invention is to be able to secure goods e.g. on covered truck platforms by means of cargo securing devices, which are easy to lock in arbitrary positions on existing structure elements, such as side flaps, chapel boards and similar details, provided on opposite sides of the cargo space. This task has been realized in that the connecting members are pivotably connected to each other, one of them transversally to the other. The first connecting member in cross-section has the form of an inverted U, the internal distance between its shanks thereby mainly corresponding to the width of the structure element. The second connecting member is likewise U-shaped in cross-section and is with the upper portion of the U-shanks pivotably connected to the first connecting member and at one or preferably both shanks of the second connecting member just in front of the pivot pin there is provided a tab intended to project through a recess in the first connecting member, which tab is adapted, in one of the active pivot positions of the second connecting member, to be in engagement with the structure element, whereas the tab in its other end position is out of engagement therewith.

## Description of the drawings

Fig. 1 shows in perspective a cargo space with cargo that has been secured with the device according to the invention.

Fig. 2 shows one of the connecting members in bigger scale and in a front view.

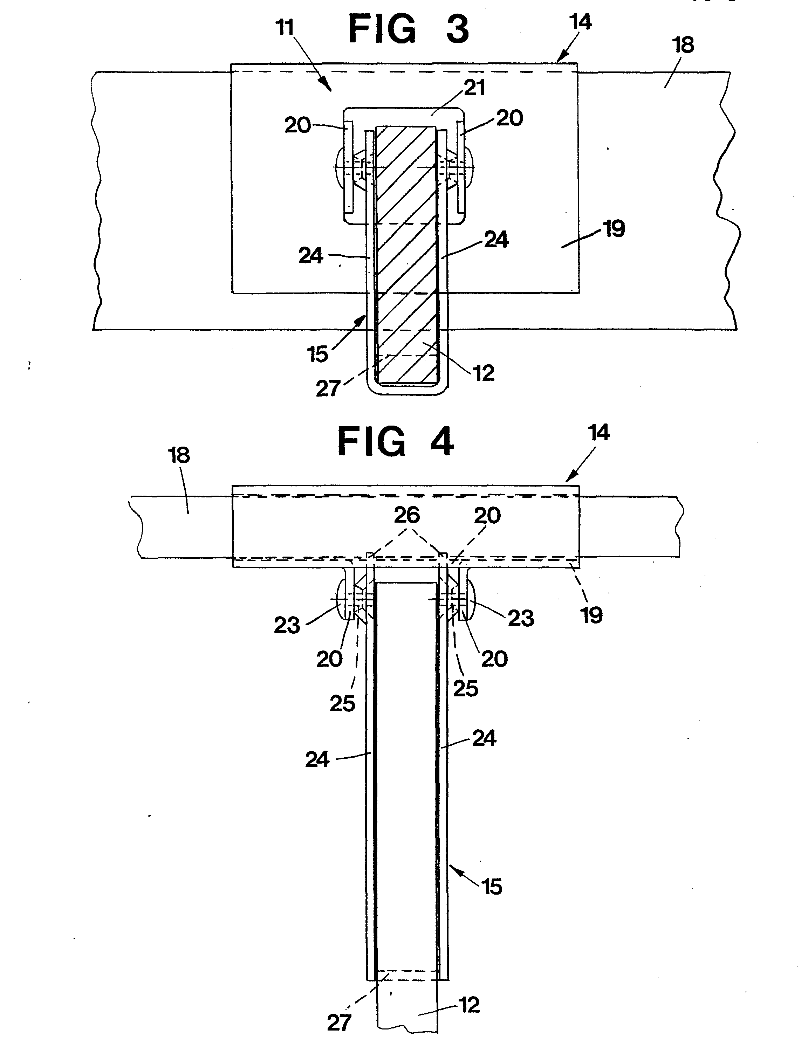

Fig. 3 and 4 show the connecting member shown in Fig. 2 in side view and from above.

## Description of embodiments

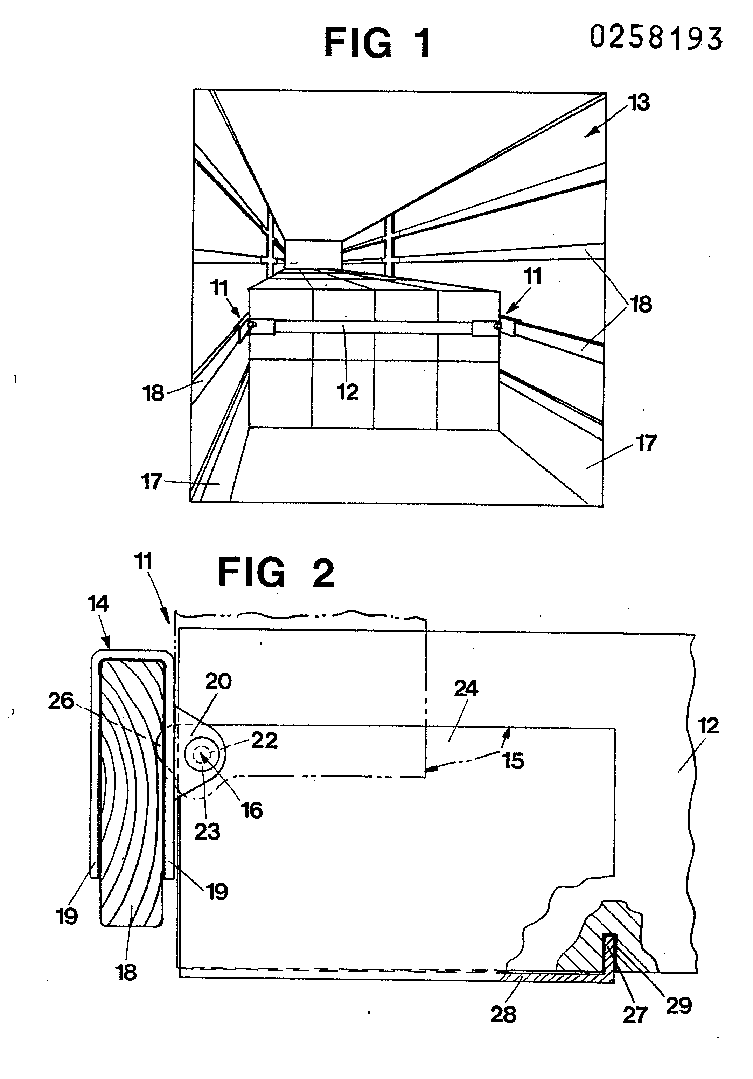

The cargo securing device according to the invention consists of two connecting means 11 and a cross-bar 12 applicable therebetween, and extending over mainly the full width of the cargo space 13. Each connecting means consists of two connecting members 14 and 14 pivotably connected to each other by means of a pivot 16. A first one of the connecting members 14 in cross-section has the shape of an inverted U, which is designed thus that it can be thread over one of the structure elements that limit the sides of the cargo space, and which elements may be the side flaps 17 of the vehicle or, at covered cargo spaces, its chapel boards 18, such as shown in Fig. 1.

At one shank 19 of the connecting member 14 are arranged supporting fittings 20, which preferably can consist of lugs stamped out of the shank 19, thus that a recess 21 is formed therein. In the supporting fittings 20 there is provided holes 22 for a supporting journal 23 serving as pivot 16.

The second connecting member 15 likewise consists of a cross-sectionally U-shaped profile, the space between the shanks 24 of which is so chosen that in said space can be inserted the end portion of said cross-bar 12. At one upper end of the shanks 24 is provided a through-bore 25 for receiving the supporting journal 23, thus that the connecting member 15 can be pivoted 90$^0$ i relation to the first connecting member 14. The shanks 24 of the second connecting member 15 are provided with one tab 26 each located just in front of the pivot 16 and having such a length and shape that they project through the recess 21 and a short distance into the wooden batten 18 situated there inside, i.e. the chapel board, when the second connecting member 15 is in its folded-down position, such as shown in continuous lines in Fig. 2. By placing two connecting means 11 just opposite each other, each one on a chapel board 18 or the like, is it possible to locate a cross-bar 12 with its ends in one connecting member 15 each, whereby is obtained an efficient arresting of the cargo at any arbitrary position along the side flaps 17 or the chapel boards 18.

If the cargo securing device shall be removed or moved, the cross-bar 12 is first removed from the connecting members 15, whereupon these may be swung up about the pivots 16, thus that the tab 26 will be disengaged from the structure element 17 or 18, whereupon the connecting means is free and can be moved or removed.

If the cargo securing device according to the invention shall be able also to take up pulling stresses, e.g. when the cargo exerts a pressure on the side flaps or the chapel boards resp., the second connecting member 15 may be equipped with one or more lateral flanges 27, preferably arranged at the intermediate portion 28 of the profile and welded to the side shanks 24. The flange 27 cooperates with a corresponding lateral groove 29 in the lower edge of the cross-bar 12.

The connecting means 11 can also be designed for connection to vertical struts in the cargo space either with the design shown or with the connecting members 14 and 15 turned 90$^0$ in relation to each other.

The invention is not limited to the embodiment shown, but a plurality of variations are possible within the scope of the claims.

## CLAIMS

1. A cargo securing device for the cargo space (13), preferably on truck and trailer platforms and incorporating at least one cross-bar (12) or the like, applicable laterally over the cargo space and the end portions of which by means of connecting means (11) being attachable to structure elements such as side flaps (17), chapel boards (18) or the like, limiting said cargo space, whereby each connecting means consists of two connecting members (14,15), a first one (14) for loose connection to said structure element (17) and a second one (15) for receiving one end portion of the cross-bar (12),
characterized therein,
that the connecting members (14,15) are pivotably connected to each other, one of them transversally to the other, that the first connecting member (14) in cross-section has the form of an inverted U, the internal distance between its shanks mainly corresponding to the width of the structure element (17,18), that the second connecting member (15) is likewise U-shaped in cross-section and with the upper portion of the U-shanks (24) is pivotably connected to the first connecting member (14), and that there, at one or preferably both shanks of the second connecting member (15), just in front of the pivot pin (16), is provided a tab (26) intended to project through a recess (21) in the first connecting member (14), which tab (26) is adapted, in one active pivot position of the second connecting member (15), to be in engagement with the structure element, whereas in its other end position the tab is out of engagement therewith.

2. A cargo securing device as claimed in claim 1, characterized therein, that the first connecting member (14) is equipped with at least one flange (27) arranged laterally relative to the cross-bar (12) and that the cross-bar is equipped with corresponding grooves (29).

## FIG 1

0258193

## FIG 2

0258193

# FIG 3

# FIG 4